(19) Europäisches Patentamt
European Patent Office
Office européen des brevets

(11) Publication number: **0 494 542 A2**

(12) **EUROPEAN PATENT APPLICATION**

(21) Application number: **91312050.7**

(22) Date of filing: **27.12.91**

(51) Int. Cl.5: **C08L 27/06**, C08L 33/24, //(C08L27/06,33:24),(C08L33/24, 27:06)

(30) Priority: **08.01.91 US 638585**

(43) Date of publication of application: **15.07.92 Bulletin 92/29**

(84) Designated Contracting States: **BE DE FR GB IT**

(71) Applicant: **ROHM AND HAAS COMPANY**
**Independence Mall West**
**Philadelphia Pennsylvania 19105(US)**

(72) Inventor: **Fromuth, Harry Charles**
**904 Sterner Mill Road**
**Trevose, Pennsylvania 19047(US)**
Inventor: **Cohen, Leslie Alan**
**55 Polder Drive**
**Langhorne, Pennsylvania 19053(US)**
Inventor: **Freed, William Thayer**
**9 Edna Horn Drive**
**Stockton, New Jersey 08559(US)**
Inventor: **Cinoman, Douglas Samuel**
**1970 New Rodgers Road**
**Levittown, Pennsylvania 19056(US)**

(74) Representative: **Angell, David Whilton et al**
**ROHM AND HAAS (UK) LTD. European Operations Patent Department Lennig House**
**2 Mason's Avenue**
**Croydon CR9 3NB(GB)**

(54) **Polyglutarimides with improved properties in poly(vinyl chloride).**

(57) The content of residual volatile amines in polymers containing at least about 30 weight percent of glutarimide units having the structure

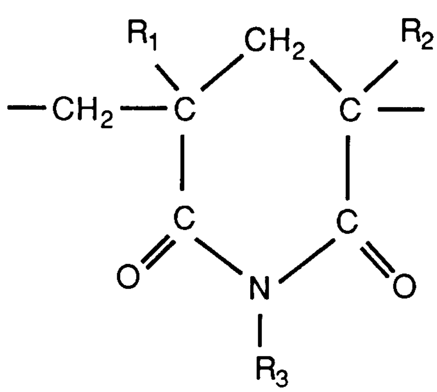

wherein $R_1$ and $R_2$ are separately H or $CH_3$, and $R_3$ is H or $C_1$ - $C_4$ lower alkyl, canbe reduced to below 50 ppm by subjecting the molten polymer to a temperature of from about 250 to about 300 °C in an extruder equipped with a means for devolatilization and applying a vacuum of at least about 600 mm. mercury. The polyglutarimides subjected to this process are especially useful in blends with poly(vinyl chloride).

EP 0 494 542 A2

Polyglutarimides, that is, polymers containing 10 or more weight percent of units of the structure

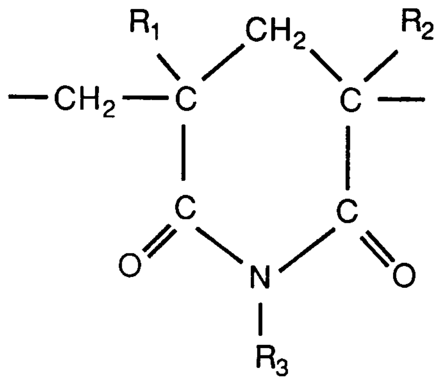

wherein $R_1$ and $R_2$ are separately H or $CH_3$, and $R_3$ is H, $C_1$-$C_{20}$ alkyl, substituted ($C_1$-$C_{20}$)alkyl, aryl, substituted aryl, aralkyl, substituted aralkyl, or heterocyclic, have been known for some years as polymers with unique properties, both in the neat form and in blends. Recently commercial activity has begun to produce them on a large scale for many uses as plastics in their own right, as modifiers of performance of plastics such as poly(vinyl chloride), and as components of binary and ternary blends. Polyglutar-imides, especially those where $R_1$, $R_2$, and $R_3$ are methyl, exhibit a combination of high service temperature, high modulus, weatherability, clarity, barrier properties, and an ability to accept impact modification that offers commercial opportunities in such fields as automobile components, such as light housings, sun roofs, glazing, and the like, in electronics uses, such as optical disks and optical fibers, medical devices, business equipment, building/construction, in glazing, as molded articles, as monolithic bottles, and in multi-layer composites.

The polyglutarimides are also useful in binary and ternary blends with many thermoplastics, and as additives for certain thermoplastics, especially poly(vinyl chloride) (PVC). Blends with PVC exhibit an improved service temperature and are useful in siding, equipment housing, hot-fill packaging, and the like.

The preferred manufacturing process for poly(glutarimides), which is direct, requires no solvents, produces a polymer of good thermal stability, can be adapted to a continuous process, and has advantages over the several other techniques known to the art, is based on US-A-4,246,374 wherein a polymer with a high concentration of ester groups, such as from a (meth)acrylate polymer, and especially from a polymer of methyl methacrylate, is contacted with ammonia or a primary amine in the molten state in an extruder, and the methanol, primary amine, and by-product secondary and tertiary amines removed by vacuum devolatilization.

Other processes for the preparation of polyglutarimides, such as for treatment of a methacrylic ester or methacrylic add polymer in solution or suspension with a primary amine, may also be utilized to produce polyglutarimide.

Polyglutarimides prepared by the of US-A-4246374 process or other processes may be further treated by the method of US-A-4,727,117 also incorporated by reference, wherein the content of acid and anhydride groups in the polyglutarimide are substantially reduced by reaction with an alkylating or esterifying agent. Particularly efficient in this respect are alkyl orthoesters, such as tetramethyl orthocarbonate, trimethyl orthoformate, dimethyl carbonate, and the like.

Polyglutarimides which are useful in food-packaging applications, such as in monolithic bottles, multilayer film and bottles, or in blends with PVC for hot-fill applications, need to exhibit a low level of non-aqueous volatiles and of food-simulant extractables. The former refers to volatiles other than water detected in the polymer prior to or after processing into the final object which are detected by analysis of the volatiles above the polymer, such as by head-space analysis of the pellets in a closed container or of the contents of an empty bottle; in the present context, major contributors are the mixtures of amines utilized or formed during the imidization process. The latter refers to materials extracted from a formed object, such as a monolithic bottle or a PVC/polyglutarimide bottle, by food simulants such as water, ethanol-water mixtures, acetic add-water mixtures, heptane, and the like.

It is further of importance to remove from an additive polymer, such as an additive polymer for PVC, materials which may react with components of the PVC or with chemicals used to stabilize and process PVC. For example, in certain formulations of PVC containing organometallic stabilizers, the blend of the stabilized PVC with a glutarimide additive will exhibit poorer heat stability than the same PVC without the

glutarimide additive. To overcome the problem, higher levels of stabilizers may be used, adding to raw material cost, or milder processing conditions may be used, adding to processing cost. A means to improve the thermal stability of glutarimide additives in PVC without additional cost would be desirable.

We have now found that one category of material present in low amounts in polyglutarimide and surprisingly important to the thermal stability of PVC consists of volatile amines and we have surprisingly found that the removal of volatile amines from polyglutarimide improves the thermal stability of polyglutarimide blends with PVC. We have also found a process by which the content of volatile amines in polyglutarimide may be significantly reduced to the level where this thermal stability improvement is attainable.

The art is silent on the desirability of thorough removal of such residual amines to achieve improved performance, especially in PVC blends, and silent as to means to achieve such removal. Indeed the art is silent on means to produce very low levels of non-aqueous volatiles, of which amines are an example, in general from polyglutarimides, such as poly(N-dimethyl dimethylglutarimide), or to such polyglutarimides themselves. We have now found that a desirable target is reduction of volatiles (as measured by trimethylamine analysis) to below 50 ppm, preferably to below 30 ppm, more preferably to 3 ppm or below, as detected by GLC analysis. Levels to below 30 ppm can be obtained by a wash with methanol and/or water, followed by extrusion devolatilization as described herein, as disclosed in our co-pending EP-A-U.S. Serial No. 638 586, filed on the same date as the present application.

While it may have been generally recognised as desirable to decrease food-simulant extractables in general so as to achieve acceptable organoleptic properties for materials packaged in such processed PVC, we have now found, in the case of polyglutarimides, that lowering the volatile content, as specifically measured by lowering of residual amine, has an positive effect on stability in PVC blends. This amine, when $R_3$ is methyl, may be residual monomethylamine, or it may be dimethylamine or trimethylamine formed as by-products of the imide formation. A decrease below 30 ppm of such residual amines is desirable to improve thermal stability.

We have found that polyglutarimides of lowered residual amine content can be formed by heating the polyglutarimide at temperatures from about 250 °C to about 300 °C in a reactor, preferably an extruder, equipped with a means for devolatilization and applying a vacuum of at least 0.0588 bar (600 mm. mercury) and isolating the polymer in solid form. The polymer so formed, when compared to polyglutarimides of otherwise similar preparation history, but without the additional processing to lower volatiles, has a reduced level of non-aqueous volatile components, will have equivalent or superior performance in the response to extraction with food-simulants, and, surprisingly, is more thermally stable in PVC blends.

The polyglutarimide to be contacted in the extruder with the combination of heat and vacuum is defined as a polymer having at least 30 weight-percent of units with the dimethylglutarimide cyclic structure noted above. Preferred is that structure where $R_1$ and $R_2$ are both methyl groups and where $R_3$ is hydrogen, or ($C_1$ to $C_4$)-alkyl. Especially preferred is the structure where $R_3$ is methyl, as that unit, N-methyldimethylglutarimide, yields glutarimides of a commercially desirable balance of high service temperature, good barrier properties, weathering, and the like.

Other units may be present in the polyglutarimide structure, such as those derived from esters of (meth)acrylic acid, or from vinyl aromatic monomers such as styrene and the like; lists of such copolymerizable monomers are found in the incorporated references. Especially preferred are units derived from methyl methacrylate. Units derived from (meth)acrylic acid and/or (meth)acrylic anhydride, which are formed during the imidization process, may be present in the polymer to be devolatilized. For certain uses, such as a modifier for PVC, it is preferred these functionalities be removed by methods such as taught in US-A-4727117. A commercially available heat distortion improver for PVC is a polymer containing ca. 44 weight percent N-methyl dimethylglutarimide units, the rest being units derived from methyl methacrylate, and $<0.5$ weight percent acid or anhydride units, and containing $>50$ ppm of trimethylamine.

The molecular weight of the polyglutarimide is not critical to the devolatilization process, although it is preferred for most end uses of the polyglutarimide that the molecular weight be between about 50,000 and 250,000 (weight-average).

The devolatilization of the polymer in the molten state may be accomplished in any of a variety of processing devices or reactors, such as autoclaves, wiped film stills, and the like, but an extruder, especially a devolatilizing extruder, is preferred.

The extruder may be a single-screw or twin-screw device of various configurations, and may be equipped with mixing devices to assure better contact. The temperature of contact is preferably from about 250 to about 300 °C. Contact times may be from less than 1 second to above 1 minute, depending on the size of the devolatilization zone and the rate at which the imide is passed through the extruder. Vacuum applied should be at least about 0.0588 bar (600 mm. of mercury).

The invention encompasses several means of processing to obtain the polyglutarimide prior to devolatilization. The polyglutarimide may be prepared separately by any of many methods known to the literature, isolated, and cooled the separate preparation may optionally include an acid/anhydride removal process, and will preferably involve a devolatilization step. The cooled polymer is then heated from the solid state to the molten state prior the second devolatilization; this is commonly known as a "re-pass" process.

A preferred process to minimize thermal contact will cause the glutarimide units to be formed in the molten polymer immediately prior to the contact with the devolatilization apparatus. The imidized polymer can be formed by any of several known methods, taken into the molten step for removal of reactants, and then contacted with the devolatilization apparatus. Preferably the imidization is conducted in one zone of a reactor and the polymer then passed into an adjoining zone for contact with the devolatilization apparatus. It should be noted that there are larger quantities of volatiles to be removed than by use of the re-pass process (even though thermal history is minimized), and that the devolatilization conditions may have to be more severe, such as higher temperature, adjustment of the devolatilization apparatus to present more polymer surface, longer time in the devolatilization zone, or application of a higher vacuum.

A small amount of water (as steam) or low boiling hydroxylic material, such as methanol, may be added to the melt at or near the devolatilization port to facilitate expulsion of the residual amines.

As noted, many uses of the polyglutarimides require removal of the acid and anhydride groups present prior to processing into useful objects or combination into blends. The process of US-A-4727117 is most useful in this respect. It is preferred that this acid- reducing process be used in preparing polymers useful in the blending with PVC. Either the re-pass process or a single devolatilization process may be used with the acid-reduced polyglutarimides.

The polyglutarimide may then be compounded while still in the molten form with stabilizers, pigments, ultraviolet stabilizers, dyes, fillers, impact modifiers, and the like prior to extrusion into pellets or a shaped object; for some uses, as in blends with PVC, the polymer maybe extruded directly without any further additives.

For most efficient removal of residual amines, the extruder may be configured so as to have two or more vacuum devolatilization zones, one prior to the acid-reduction step, and one following the acid-reductant step. It is desirable to monitor the volatiles from the collected polymer and adjust the devolatilization conditions to achieve a non-aqueous volatiles analysis (or analysis for content of a major volatile component, such as trimethylamine) below 50 ppm, preferably below 30 ppm, more preferably below 3 ppm, and most preferably at 0 ppm.

The polyglutarimide may be re-converted to the molten state from solid form, such as pellets, sheet, or re-grind, or the devolatilization process may be carried out at the end of the processing extruder used to prepare the polyglutarimide or to carry out the acid-reducing reaction.

The polyglutarimide with lowered content of residual amines may be directly processed into useful articles; however, it is more common to isolate the devolatilized polyglutarimide as strands which are chopped into pellets. These pellets may be then used for many purposes in blends, formation of sheet, film, or molded objects.

After lowering the content of residual amines is completed, the molten polymer may be treated with conventional additives, such as dyes, pigments, UV absorbers, thermal stabilizers, and the like. Especially useful in this respect for use in weatherable clear applications are ultraviolet stabilizers such as hindered amine light stabilizers (HALS), benzotriazoles, and the like. Improved color on processing of benzotriazole-stabilized polyglutarimides with sharply reduced levels of residual amines is often observed. It may also be blended with other polymers directly, and/or combined with fibers, such as glass or carbon fibers, or fillers prior to isolation as pellets.

When the residual amine content is lowered to below about 100 ppm, preferably below 50 ppm, the polymer may be contacted with a low level of a reducing agent further to improve the color. Preferred is hypophosphorous acid at from about 0.05 to about 2 weight percent, wherein an improvement in color is seen over a similar polymer processed in a similar manner but without the hypophosphorous acid. If the hypophosphorous acid is added when the amine content is greatly above about 100 ppm, corrosion of the metal may occur to cause haze in the isolated polymer.

The advantages of the polymer of lower residual amines content will be seen in such uses as optical fibers, lenses, glazing, lighting fixtures, monolithic bottles, multi-layered bottles with layers of other clear plastics such as polyester or polycarbonate, and the like.

Blending of the polymer with PVC homo- or copolymers may be carried out as taught in US-A-4,255,322, 4,650,824, and 4,727,117. The blend may be a blend of from about 5 to about 95 parts of poly-(vinyl chloride) with from about 5 to about 95 parts of polyglutarimide. It is preferred for best compatibility with PVC that the blend be a blend of poly(vinyl chloride) with from about 5 to about 40 parts per 100 parts

of poly(vinyl chloride) of a polymer containing at least about 30 weight percent of glutarimide units having the structure

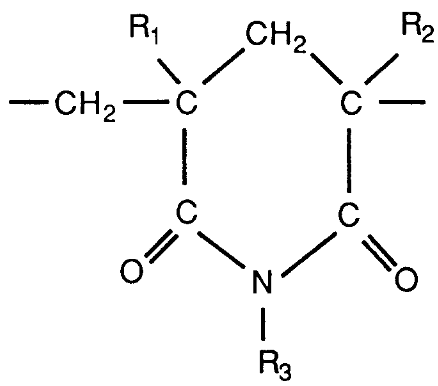

wherein $R_1$ and $R_2$ are separately H or $CH_3$, and $R_3$ is H, $C_1$-$C_4$ alkyl or cyclohexyl. It is more preferred that the blend be with a polymer wherein $R_1$, $R_2$, and $R_3$ are $CH_3$, and prepared by the process described above where the acid/anhydride content is reduced.

By "PVC" we mean to refer to vinyl chloride homopolymer and also, copolymers of vinyl chloride, especially those with vinylidene chloride, vinyl acetate and/or ethylene, as well as graft copolymers of vinyl chloride onto polymeric rubbers, such as poly(acrylates). PVC may be blended with the devolatilized polyglutarimide of low residual amine content at use levels of about 5 to about 40 parts of polyglutarimide per 100 parts of PVC resin, although both higher or lower amounts may be useful to fulfill certain property requirements. The blends may contain any of several well-known stabilizers for PVC, such as organotin stabilizers, calcium-zinc stabilizers, organolead stabilizers, barium-cadmium stabilizers, and the like. The blend may also carry many well-known components of PVC blends, such as impact modifiers, such as MBS, ABS, acrylic core/shell, chlorinated polyethylene, and the like; processing aids, such as high molecular-weight acrylic polymers; lubricants, such as esters, waxes, and the like; light stabilizers, dyes, and the like.

In the following Examples, which are given solely for the purpose of illustration, the improvement in color of the PVC compositions seen when the devolatilized polyglutarimide of the present invention is employed is reported as an extension of the time to char. It should be noted that initial color of the blend, with just enough thermal history to cause fusion to a well-mixed blend, is either equivalent to or improved over the performance of the control polyglutarimide, and that an decrease in yellowing at any time prior to charring is noted for the polymer of this invention relative to the control polyglutarimide after receiving a similar heating history.

The improved thermal stability of the glutarimide of the present process in PVC and the lowered non-aqueous volatiles content and food-simulant extractants can be utilized in the manufacture of PVC bottles and containers, especially for hot-fill, such as for ketchup, jellies, syrups, and the like; in siding for buildings, window profiles, and the like; in housings for electrical components; and in many other uses requiring the flame resistance and toughness of PVC and the added heat distortion resistance imparted by the polyglutarimide.

## EXAMPLES

### EXAMPLES 1-2

These examples contrast the controlled devolatilization with the residual content achieved upon normal reaction to prepare a polyglutarimide.

A polymer of weight average MW ca. 110,000 and imide nitrogen content 4.79%, corresponding to ca. 44% imide content, was prepared with no additives. The acid and anhydride content were reduced to low levels by contact with dimethyl carbonate. It was then re-processed in a 5.1 cm. extruder equipped with means for washing, venting, and a final devolatilization. In the re-processing step, the polymer was fed at a rate of 59 kg./hour, the melt was at 246 ° C; and a vacuum of 0.0588 bar (600 mm.) was applied.

Samples were analyzed for color and residual TMA content. The values given are the average for separate determinations of several portions of re-processed polyglutarimide. MMA is monomethylamine;

DMA is dimethylamine. Methanol (MeOH) is formed during the imidization process as well as trimethylamine and dimethylamine.

| Example | Treatment | TMA | MeOH | MMA | DMA |
|---|---|---|---|---|---|
| 1 | None(control) | 56 | 70 | <5 | <5 |
| 2 | re-pass | 21 | 36 | <5 | <5 |

EXAMPLE 3

This example demonstrates the improved thermal stability in PVC when the carefully devolatilized polymer of Example 2 is compared with a similar polymer which was not as thoroughly processed to remove TMA. Note that the control polymer has received less thermal exposure than the re-passed sample of the invention.

The polymer and the control are ground to a powder, and admixed with PVC and other additives in a "masterbatch" formulation. Three different types of stabilizers were studied. Evaluation is performed by heating the masterbatch plus polyglutarimide on a two-roll mill, the front roll operating at 26 rpm and the rear at 20 rpm, at 205 °C. After fusion occurs, samples are removed every three minutes and cut or pressed into 25.4 by 25.4 by 3.15 mm. pieces, which are then ranked for color. The time to black for an "unmodified control" with no glutarimide polymer is noted, and the % decrease in time for the various additives are noted. Although even the reduced amine content glutarimide polymer is less stable than the "unmodified control", it exhibits a significant advantage in stability over the sample which was not washed with water.

In parallel experiments, using a similar glutarimide polymer with a TMA content of 20 ppm, similar improvements were seen in both calcium-zinc and tin mercaptide formulations over a control glutarimide polymer having 55 ppm residual TMA (in the following tables, phr is parts per hundred parts of PVC resin).

| Time to char, minutes | | | |
|---|---|---|---|
| Polymer | Example 2 20-30ppm | Example 1 50-60 ppm | Control no Glutarimide |
| Lead, K-68 | 70 | 45 | 90 |
| Lead, K-50 | 42 | 36 | 54 |
| Tin, K-60 | 15 | 12 | 15 |
| Tin, K-50 | 21 | 21 | 24 |
| Calcium-Zinc | 21 | 21 | 30 |

| Tin stabilized formulations: | | | |
|---|---|---|---|
| | PHR | | |
| PVC, K 60 | 100 | PVC, K 50 | 100 |
| Glutarimide polymer | 25 | Glutarimide polymer | 25 |
| Octyl tin stabilizer | 1.5 | Tin mercaptide | 2 |
| Glycerol monostearate | 1.6 | Glycerol monostearate | 1.6 |
| Waxes | 0.3 | Wax | 0.2 |
| Acrylic processing aid | 1.0 | Acrylic processing aid | 1.0 |
| Blue toner | 0.01 | Acrylic lubricating-processing aid | 0.5 |
| MBS Impact Modifier | 8 | | |

| Lead stabilized formulations: | | | |
|---|---|---|---|
| | PHR | | PHR |
| PVC, K 68 | 100 | PVC, K 50 | 100 |
| Glutarimide polymer | 25 | Glutarimide polymer | 25 |
| Lead phosphite stabilizer | 4 | Lead phosphite stabilizer | -- |
| Lead stearate stabilizer | 0.5 | Lead stearate stabilizer | 4.7 |
| Lubricants | 1.05 | Lubricants | 0.8 |
| Acrylic processing aid | -- | Acrylic processing aid | 1.5 |
| Calcium carbonate | 4 | Calcium carbonate | -- |
| Titanium dioxide | 4 | Titanium dioxide | 4 |
| Acrylic impact modifier | 7 | Acrylic impact modifier | 10 |

| Calcium-zinc stabilized bottle formulation: | |
|---|---|
| | PHR |
| PVC, K 58 | 100 |
| Glutarimide polymer | 25 |
| Calcium behenate | 0.35 |
| Zinc 2-ethylhexoate | 0.085 |
| Epoxidized soybean oil | 5.5 |
| Lubricants | 2.1 |
| Waxes | 1.0 |
| Acrylic processing aid | 0.3 |
| Acrylic lubricating-processing aid | 0.2 |

In these Examples the MBS modifier is a core-shell polymer of a butadiene/styrene crosslinked core with a methyl methacrylate shell; the acrylic processing is a high MW (>1,000,000) copolymer of methyl methacrylate/ethyl acrylate; the lubricating processing aid is a core/shell polymer with 50 parts of a low MW (<200,000) of a butyl acrylate/styrene 82/18 copolymer and a shell of poly(methyl methacrylate); the acrylic impact modifier is a core/shell polymer of a crosslinked butyl acrylate (80 parts) with a shell of 20 parts of methyl methacrylate.

## Claims

1. A blend of (A) from 5 parts to 95 parts of polymer containing a major amount of units of vinyl chloride and (B) from 5 to 95 parts by weight of polymer containing at least about 30 weight percent of glutarimide units having the structure

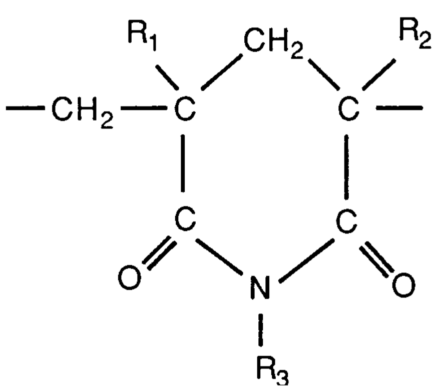

wherein $R_1$ and $R_2$ are separately H or $CH_3$, and $R_3$ is H or ($C_1$-$C_4$)alkyl, characterised in that polymer B has been heated to a temperature of from 200°C to 300°C and subjected to a vacuum of at least

0.0588 bar (600 mm Hg) in order to reduce the volatile amine content thereof.

**2.** A process for lowering the content of residual amines of polymers containing at least about 30 weight percent of glutarimide units having the structure

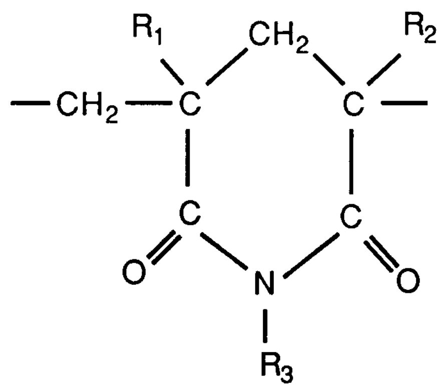

wherein $R_1$ and $R_2$ are separately H or $CH_3$, and $R_3$ is H or $(C_1 - C_4)$-alkyl, comprising heating the polymer to a temperature of from 250 to 300 °C in a reactor and subjecting the polymer to a vacuum of at least 0.0588 bar (600 mm. mercury).

**3.** A process as claimed in Claim 2 wherein $R_1$, $R_2$, and $R_3$ are $CH_3$ and/or the polymer further contains units derived from methyl methacrylate.

**4.** A process as claimed in Claim 2 or 3 wherein the polymer is first heated from the solid state to the molten state prior to heating the polymer to the temperature of 250 to 300 °C and wherein the reactor is an extruder equipped with means for devolatilization.

**5.** A process as claimed in Claim 2 or 3 wherein the glutarimide units are formed in the molten polymer immediately prior to heating the polymer to the temperature of 250 to 300 °C and wherein the reactor is an extruder equipped with means for devolatilization.

**6.** A process as claimed in Claim 2 or 3 wherein the glutarimide units are formed in the molten polymer, and the molten polymer containing glutarimide units is then contacted with an alkylating or esterifying agent prior to heating the polymer to the temperature of 250 to 300 °C and wherein the reactor is an extruder equipped with means for devolatilization.

**7.** A blend as claimed in Claim 1 wherein the glutarimide polymer has been subjected to devolatilisation conditions as claimed in any of Claims 3 to 6.

**8.** A blend as claimed in Claim 1 or 7 wherein the glutarimide polymer has a content of trimethylamine below 50 ppm, preferably below 30 ppm, more preferably below 20 ppm most preferably below 3 ppm.

**9.** A blend as claimed in Claim 1, 7 or 8, containing from 5 to 40 parts (per 100 parts of the vinyl chloride polymer of the polymer containing glutarimide units.